Europäisches Patentamt

(19) European Patent Office

Office européen des brevets

(11) Publication number: **0 006 364**
**B1**

(12) **EUROPEAN PATENT SPECIFICATION**

(45) Date of publication of patent specification: **17.08.83**

(51) Int. Cl.³: **G 02 B 5/14, H 01 B 9/06**

(21) Application number: **79301177.6**

(22) Date of filing: **19.06.79**

(54) An improved optical cable.

(30) Priority: **20.06.78 GB 2734378**

(43) Date of publication of application:
**09.01.80 Bulletin 80/1**

(45) Publication of the grant of the patent:
**17.08.83 Bulletin 83/33**

(84) Designated Contracting States:
**AT BE CH DE FR GB IT LU NL SE**

(56) References cited:
**DE - A - 2 114 454**
**DE - A - 2 527 769**
**DE - A - 2 635 917**
**DE - A - 2 732 150**
**DE - B - 1 035 754**
**US - A - 2 854 500**
**US - A - 3 865 967**
**US - A - 4 000 416**

(73) Proprietor: **BICC Public Limited Company**
**21, Bloomsbury Street**
**London, WC1B 3QN (GB)**

(72) Inventor: **Goldberg, John Leslie**
**3 Haslin Crescent Christleton**
**Chester Cheshire, CH3 6AN (GB)**
Inventor: **Sadler, Alan Arthur**
**2 Eversley Close Fordsham**
**Warrington, Cheshire (GB)**

(74) Representative: **Ross Gower, Edward Lewis et al,**
**BICC plc Patents Department 38 Wood Lane**
**London W12 7DX (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

An improved optical cable

This invention relates to optical cables for the transmission of the ultra-violet, visible and infra-red regions of the electromagnetic spectrum, which regions, for convenience, will hereinafter all be included in the generic term "light", and especially, but not exclusively, to optical cables for use in the communication field adapted for transmission of light having a wavelength within the range 0.8 to 1.3 micrometres.

Optical cables for this purpose comprise at least one separate optical fibre and/or at least one optical bundle and examples of such optical cables are described and claimed in the Complete Specifications of our British Patents Nos. 1 479 426 and B 1 479 427. The two British patents and German Offenlegungsschrift No. 2635917 disclose forms of optical cable in which separate optical fibres and/or optical bundles are loosely housed in fluid-tight elongate compartments extending along the length of the cable and containing a fluid such as air or a grease such as petroleum jelly. German Offenlegungsschrift No: 2635917 further discloses an optical cable comprising a tube in which are loosely housed separate optical fibres and, surrounding and spaced from the tube by two diagonally opposed reinforcing wires, an outer protective sheath.

For many years, it has been common practice to protect electric cables such as telecommunication cables against the effect of external damage, by a pressurisation system in which dry air is pumped into the cable core and is maintained continuously at a pressure in excess of that of the atmosphere so that the likelihood of entry of water through a damaged part of the cable sheath is reduced; by an appropriate monitoring equipment, it is possible to locate the position of a damaged part of the cable sheath. Examples of such cables and such monitoring equipment are described in US Patent Specification No. 3865967 and German Auslegeschrift No. 1035754.

It is in the interests of users of optical cables forming a part of a communications system that the system should be protected against illegal tapping of transmitted signals and in U.S. Patent Specification No: 4000416 there is described a multiple core optical fibre comprising an inner core for transmitting secret information, an outer core for transmitting a security signal and, between the inner and outer cores, an intermediate cladding layer of lower refractive index material preventing intermixing between the secret information and the security signal; attempting access to the inner core causes a decrease in the intensity in the security signal to alert an operator to the attempted intrusion.

It is an object of the present invention to provide an improved optical cable of such a form that illegal tapping of the cable can be readily detected without any visible indication to a person wishing to tap the cable illegally that the cable incorporates an alarm system for alerting that the cable has been opened up.

According to the invention, the improved optical cable comprises at least one separate optical fibre and/or at least one optical bundle comprising a group of optical fibres or a group of fibres including at least one optical fibre and including at least one non-optical reinforcing fibre, the separate optical fibre or fibres and/or the optical bundle or bundles being loosely housed in the bore of a tube of a fluid-impermeable material, which tube extends throughout the length of the cable and is surrounded by a fluid-impermeable wall spaced from the tube to define an elongate compartment, characterised in that the elongate compartment is filled with air or other gas which is at a pressure above or below atmospheric pressure and which will have no deleterious effect on the transmission characteristics of the cable.

Detection of a change in pressure of the air or other gas by monitoring means coupled to the cable will serve to indicate that the fluid-impermeable wall has been ruptured, possibly with the intention of illegal tapping of transmitted signals.

Preferably, the optical cable also includes, radially outwardly of the or each optical fibre and/or optical bundle, at least one electric conductor which extends throughout the length of the cable and along which a detectable current can be caused to flow, an interruption in the flow indicating that the conductor has been cut. The or each electric conductor is preferably embedded in or positioned radially inwardly of the cable sheath, or of the fluid-impermeable wall, so that there is no visible indication that the cable includes an electric alarm system. In this case, preferably the conductor is a circumferentially continuous conductor that surrounds the separate optical fibre or fibres and/or optical bundle or bundles and that is embedded in the cable sheath or said fluid-impermeable wall.

In one preferred embodiment, the optical cable includes inner and outer electric conductors radially spaced apart and electrically insulated from one another; the elongate compartment is a compartment extending throughout the length of the cable between the inner and outer conductors and surrounding the inner conductor; and the or each separate optical fibre and/or optical bundle is loosely housed in the bore of the inner conductor and air or other gas at a pressure above or below atmospheric pressure is contained in the compartment between the inner and outer conductors.

Where the optical cable includes inner and outer conductors, or has one or more than one pair of conductors, radially outwardly of the or each optical fibre and/or optical bundle, a train of pulses can be sent down the cable using the inner and outer conductors or the each pair of conductors. Any person attempting to tap the cable illegally will not only have to rupture the fluid-impermeable wall and thereby cause a change in pressure of the air or other gas in the elongate compartment but will have to manipulate the conductors and introduce objects between them. Such interference with the conductors would be detectable as impedance irregularities.

The inner and outer conductors may take any convenient form. Where, as in the aforesaid preferred embodiment, the elongate compartment is between the inner and outer conductors, the means by which the inner and outer conductors are radially spaced apart and electrically insulated from one another will be of such a form that the elongate compartment is continuous throughout the length of the cable. Such spacing means may comprise at least one elongate spacing member of electrically insulating material which extends helically around or substantially parallel to the inner conductor or longitudinally spaced discs of electrically insulating material each having a hole or holes for longitudinal flow of the air or other gas.

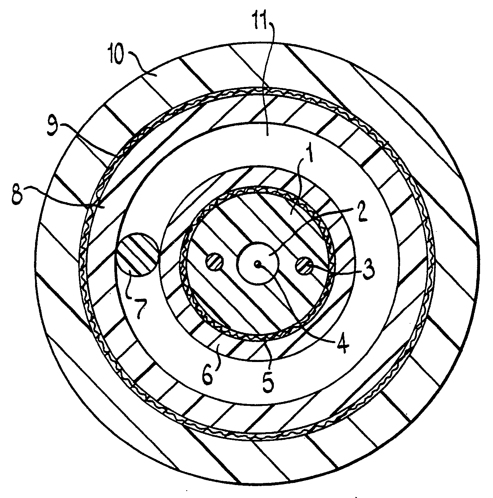

The invention will be further illustrated by a description, by way of example, of a preferred optical cable with reference to the accompanying drawing which shows a transverse cross-sectional view of the cable drawn on an enlarged scale.

The optical cable comprises a tube 1 of extruded polyethylene having a bore 2 and, embedded in the tube, two strain members 3 of aromatic polyamide. An optical fibre 6 is loosely housed in the bore 2. A circumferentially continuous inner conductor 5 of plain annealed copper wire braid overlies the tube 1 and is surrounded by an extruded layer 6 of polyethylene constituting an inner fluid-impermeable wall. A spacing thread 7 of polyethylene is helically lapped around the fluid-impermeable wall 6 and an extruded layer 8 of polyethylene overlies the helically lapped spacing thread 7 in such a way that it is concentric to the inner conductor 5 and constitutes an outer fluid-impermeable wall. Overlying the outer fluid-impermeable wall 8 is a circumferentially continous outer conductor 9 of plain annealed copper wire braid. The outer conductor 9 is surrounded by an extruded sheath 10 of polyvinyl chloride. The elongate compartment 11 bounded by the inner and outer fluid-impermeable walls 6 and 8 contains air at a pressure of 70 kN/m².

## Claim

An optical cable comprising at least one separate optical fibre and/or at least one optical bundle comprising a group of optical fibres or a group of fibres including at least one optical fibre and including at least one non-optical reinforcing fibre, the separate optical fibre or fibres and/or the optical bundle or bundles being loosely housed in the bore of a tube of fluid-impermeable material, which tube extends throughout the length of the cable and is surrounded by a fluid-impermeable wall spaced from the tube to define an elongate compartment, characterised in that the elongate compartment is filled with air or other gas which is at a pressure above or below atmospheric pressure and which will have no deleterious effect on the transmission characteristics of the cable.

## Patentanspruch

Optisches Kabel mit mindestens einer optischen Faser und/oder mindestens einem optischen Bündel mit einer Gruppe optischer Fasern oder einer Gruppe von Fasern mit mindestens einer optischen Faser und mindestens einer nicht optischen Verstärkungsfaser, wobei die getrennte optische Faser oder die getrennten optischen Fasern und/oder das optische Bündel oder die optischen Bündel lose in der Bohrung eines Schlauchs oder Rohrs aus fluidundurchlässigem Material angeordnet sind und wobei der Schlauch oder das Rohr sich über die gesamte Länge des Kabels erstreckt und von einer fluidundurchlässigen Wandung umgeben ist, die von dem Schlauch oder dem Rohr im Abstand angeordnet ist, um eine langgestreckte Kammer zu bilden, dadurch gekennzeichnet, daß die langgestreckte Kammer mit Luft einem anderen Gas gefüllt ist, deren Druck oberhalb oder unterhalb des Atmosphärendrucks liegt und die die Transmissions-eigenschaften des Kabels nicht beeinträchtigt.

## Revendication

Câble optique comprenant au moins une fibre optique séparée et (ou) au moins un faisceau optique constitué d'un gruppe de fibres optiques ou d'un groupe de fibres incluant au moins une fibre optique et au moins une fibre non optique de renforcement, la ou les fibres séparées et (ou) le ou les faisceaux optiques étant placés librement à l'intérieur d'un tube constitué d'un matériau étanche aux fluides, ce tube se prolongeant sur toute la longueur du câble et étant entouré d'une paroi étanche aux fluides et espacée de tube afin de former une alvéole allongée, caractérisé en ce que cette alvéole allongée est remplie d'air ou d'un autre gaz qui se trouve à une pression supérieure ou inférieure à la pression atmosphérique et qui n'aura aucun effet nuisible sur les caractéristiques de transmission du câble.